# FASCICULE DE BREVET EUROPEEN

(11) **EP 2 785 535 B1**
(45) Date de publication et mention de la délivrance du brevet: **10.02.2016**
(21) Numéro de dépôt: 12790530.5
(22) Date de dépôt: 20.11.2012
(51) Int. Cl.: B60C 9/28, B60C 9/18, B60C 19/00

(54) **SOMMET POUR PNEUMATIQUE D'AVION**
KRONE FÜR FLUGZEUGREIFEN
CROWN FOR AEROPLANE TYRE

(30) Priorité: 29.11.2011 FR 1160892
(43) Date de publication de la demande: 08.10.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: ESTENNE, Vincent, 63040 Clermont-Ferrand Cedex 9 (FR); CAFFEAU, Charlotte, 63040 Clermont-Ferrand Cedex 9 (FR)
(74) Mandataire: Millanvois, Patrick Jacques Jean
(86) Numéro de dépôt international: PCT/EP2012/073033
(87) Numéro de publication internationale: WO 2013/079351

(56) Documents cités:
- WO-A1-2010/000747

## Description

La présente invention concerne un pneumatique pour avion, et, en particulier, le sommet d'un pneumatique pour avion.

Un pneumatique comprend un sommet comprenant une bande roulement destinée à venir en contact avec le sol par l'intermédiaire d'une surface de roulement, deux bourrelets destinés à venir en contact avec une jante et deux flancs reliant le sommet aux bourrelets. Un pneumatique radial, telle que généralement utilisé pour un avion, comprend plus particulièrement une armature de carcasse radiale et une armature de sommet, telles que décrites, par exemple, dans le document EP 1 381 525.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions « radialement intérieur à» et « radialement intérieur» signifient respectivement « plus proche de l'axe de rotation du pneumatique, selon la direction radiale, que » et « le plus proche de l'axe de rotation du pneumatique, selon la direction radiale ». Les expressions « radialement extérieur à» et « radialement extérieur» signifient respectivement « plus éloigné de l'axe de rotation du pneumatique, selon la direction radiale, que » et « le plus éloigné de l'axe de rotation du pneumatique, selon la direction radiale ». Les expressions « axialement intérieur à» et « axialement intérieur» signifient respectivement « plus proche du plan équatorial, selon la direction axiale, que » et « le plus proche du plan équatorial, selon la direction axiale», le plan équatorial étant le plan perpendiculaire à l'axe de rotation du pneumatique et passant par le milieu de la surface de roulement du pneumatique. De façon analogue, les expressions « axialement extérieur à» et « axialement extérieur» signifient respectivement « plus éloigné du plan équatorial, selon la direction axiale, que » et « le plus éloigné du plan équatorial, selon la direction axiale». Une « distance radiale » est une distance par rapport à l'axe de rotation du pneumatique, et une « distance axiale » est une distance par rapport au plan équatorial du pneumatique. Une « épaisseur radiale » est mesurée selon la direction radiale, et une « largeur axiale » est mesurée selon la direction axiale.

L'armature de carcasse radiale est la structure de renforcement du pneumatique reliant les deux bourrelets du pneumatique. L'armature de carcasse radiale d'un pneumatique pour avion comprend généralement au moins une couche d'armature de carcasse, dite couche de carcasse. Chaque couche de carcasse est constituée d'éléments de renforcement enrobés dans un matériau polymérique, parallèles entre eux et faisant, avec la direction circonférentielle, un angle compris entre 80° et 100°. Chaque couche de carcasse est unitaire, c'est-à-dire qu'elle ne comprend qu'un seul élément de renforcement dans son épaisseur.

L'armature de sommet est la structure de renforcement du pneumatique radialement intérieure à la bande de roulement et le plus souvent radialement extérieure à l'armature de carcasse radiale. L'armature de sommet d'un pneumatique pour avion comprend généralement au moins une couche d'armature de sommet, dite couche de sommet. Chaque couche de sommet est constituée d'éléments de renforcement enrobés dans un matériau polymérique, parallèles entre eux et faisant, avec la direction circonférentielle, un angle compris entre +20° et -20°. Chaque couche de sommet est unitaire, c'est-à-dire qu'elle ne comprend qu'un seul élément de renforcement dans son épaisseur.

Parmi les couches de sommet, on distingue les couches de travail composant l'armature de travail, constituées le plus souvent d'éléments de renforcement textiles, et les couches de protection composant l'armature de protection, constituées d'éléments de renforcement métalliques ou textiles, et disposées radialement à l'extérieur de l'armature de travail. Les couches de travail conditionnent le comportement mécanique du sommet. Les couches de protection protègent essentiellement les couches de travail des agressions susceptibles de se propager à travers la bande de roulement radialement vers l'intérieur du pneumatique. Une couche de sommet, en particulier une couche de travail, est souvent une couche axialement large, c'est-à-dire qu'elle a une largeur axiale, par exemple, au moins égale au deux tiers de la largeur axiale maximale du pneumatique. La largeur axiale maximale du pneumatique est mesurée au niveau des flancs, le pneumatique étant monté sur sa jante et faiblement gonflé, c'est-à-dire gonflé à une pression égale à 10% de la pression nominale telle que recommandée, par exemple, par la Tire and Rim Association ou TRA.

Le pneumatique peut également comprendre une armature de frettage, radialement intérieure ou radialement extérieure à l'armature de sommet, voire intercalée entre deux couches de sommet. L'armature de frettage d'un pneumatique pour avion comprend généralement au moins une couche d'armature de frettage, dite couche de frettage. Chaque couche de frettage est constituée d'éléments de renforcement enrobés dans un matériau polymérique, parallèles entre eux et faisant, avec la direction circonférentielle, un angle compris entre +10° et -10°. Une couche de frettage est le plus souvent une couche de travail axialement étroite, c'est-à-dire qu'elle a une largeur axiale sensiblement inférieure à la largeur axiale d'une couche de sommet et, par exemple, au plus égale à la moitié de la largeur axiale maximale du pneumatique.

Les éléments de renforcement des couches de carcasse, de travail et de frettage, pour les pneumatiques d'avion, sont le plus souvent des câbles constitués de filés de filaments textiles, préférentiellement en polyamides aliphatiques ou en polyamides aromatiques. Les éléments de renforcement des couches de protection peuvent être soit des câbles constitués de fils métalliques, soit des câbles constitués de filés de filaments textiles.

Concernant les éléments de renforcement textiles, les propriétés mécaniques en extension (module, allongement et force à la rupture) des éléments de renforcement textiles sont mesurées après un conditionnement préalable. Par "conditionnement préalable", on entend le stockage des éléments de renforcement textiles pendant au moins 24 heures, avant mesure, dans une atmosphère standard selon la norme européenne DIN EN 20139 (température de 20 ± 2°C ; hygrométrie de 65 ± 2 %). Les mesures sont réalisées de manière connue à l'aide d'une machine de traction ZWICK GmbH & Co (Allemagne) de type 1435 ou de type 1445. Les éléments de renforcement textiles subissent une traction sur une longueur initiale de 400 mm à une vitesse nominale de 200 mm/min. Tous les résultats sont une moyenne de 10 mesures.

Les pneumatiques d'avion présentent souvent une usure non uniforme de la bande de roulement, appelée usure irrégulière, résultant des sollicitations au cours des différentes phases de vie du pneumatique: décollage, roulage et atterrissage. Il a été plus particulièrement mis en évidence une usure différentielle de la bande roulement entre une partie médiane et les deux parties latérales de la bande de roulement, axialement extérieures à la partie médiane. Usuellement, il est souhaité que l'usure de la partie médiane soit plus importante et pilote la durée de vie du pneumatique. Dans certains cas, l'usure différentielle susmentionnée exacerbe l'usure des parties latérales de la bande de roulement, qui devient dominante par rapport à l'usure de la partie médiane, ce qui entraîne un retrait prématuré économiquement préjudiciable.

Il est connu de l'homme du métier que l'usure de la bande de roulement d'un pneumatique dépend de plusieurs facteurs liés à l'usage et à la conception du pneumatique. L'usure dépend en particulier de la forme géométrique de la surface de contact de la bande de roulement du pneumatique avec le sol et de la répartition des contraintes mécaniques dans cette surface de contact. Ces deux paramètres sont fonction du profil méridien gonflé de la surface de roulement. Le profil méridien gonflé de la surface de roulement est la coupe de la surface de roulement, par un plan méridien, pour un pneumatique gonflé à sa pression nominale et non chargé.

Pour augmenter la durée de vie du pneumatique, vis-à-vis de l'usure différentielle de la partie médiane de la bande de roulement, l'homme du métier a cherché à optimiser la forme géométrique du profil méridien gonflé de la surface de roulement.

Le document EP 1 163 120 présente une armature de sommet d'un pneumatique d'avion, dont on cherche à limiter les déformations radiales lors du gonflage du pneumatique à sa pression nominale, ce qui permet de limiter les déformations radiales du profil méridien gonflé de la surface de roulement. La limitation des déformations radiales de l'armature de sommet, lors du gonflage du pneumatique à sa pression nominale, est obtenue par une augmentation des rigidités d'extension circonférentielles des couches de sommet, obtenue par le remplacement des éléments de renforcement des couches de sommet, usuellement en polyamides aliphatiques par des éléments de renforcement en polyamides aromatiques. Les modules d'élasticité des éléments de renforcement en polyamides aromatiques étant supérieurs à ceux des éléments de renforcement en polyamides aliphatiques, les allongements des premiers, pour une sollicitation en extension donnée, sont plus faibles que ceux des seconds.

Le document EP 1 381 525 précédemment cité propose une voie d'action sur la forme géométrique du profil méridien gonflé de la surface de roulement en faisant évoluer les rigidités d'extension des couches de sommet et/ou de carcasse. Ce document propose l'utilisation d'éléments de renforcement hybrides, c'est-à-dire constitués à la fois de polyamides aliphatiques et de polyamides aromatiques, à la place des usuels éléments de renforcement en polyamides aliphatiques. Ces éléments de renforcement hybrides ont des modules d'élasticité supérieurs à ceux des éléments de renforcement en polyamides aliphatiques, donc ont des allongements plus faibles, pour une sollicitation en extension donnée. Les éléments de renforcement hybrides sont utilisés dans les couches de sommet, pour augmenter les rigidités d'extension circonférentielles, et/ou dans les couches de carcasse, pour augmenter les rigidités d'extension dans le plan méridien.

Le document EP 1 477 333 propose une autre voie d'action sur la forme géométrique du profil méridien gonflé de la surface de roulement en faisant évoluer axialement la rigidité d'extension circonférentielle globale de l'armature de sommet, de telle sorte que le rapport entre les rigidités d'extension circonférentielles globales des parties axialement les plus extérieures de l'armature de sommet et de la partie médiane de l'armature de sommet soit compris dans un intervalle défini. La rigidité d'extension circonférentielle globale de l'armature de sommet résulte de la combinaison des rigidités d'extension circonférentielles des couches de sommet. La rigidité d'extension circonférentielle globale de l'armature de sommet varie dans la direction axiale, en fonction de l'évolution du nombre de couches de sommet superposées. La solution proposée est basée sur une répartition axiale des rigidités d'extension circonférentielles globales entre la partie médiane et les parties axialement les plus extérieures de l'armature de sommet, la partie médiane étant plus rigide que les parties axialement les plus extérieures de l'armature de sommet. Les éléments de renforcement utilisés dans les couches de sommet ou de carcasse sont en polyamides aliphatiques, en polyamides aromatiques ou hybrides.

Les solutions techniques présentées dans les trois documents de l'état de la technique précédemment décrits restent toutefois insuffisantes vis-à-vis de la réduction de l'usure irrégulière de la bande de roulement des pneumatiques équipant des avions de ligne et soumis à de fortes sollicitations.

Le document WO 2010000747 décrit un pneumatique d'avion, dont la pression nominale est supérieure à 9 bars et la flèche sous charge nominale supérieure à 30%, comprenant une bande de roulement ayant une surface de roulement, une armature de sommet, comprenant au moins une couche de sommet, une armature de carcasse comprenant au moins une couche de carcasse, lesdites surface de roulement, armature de sommet et armature de carcasse étant respectivement définies géométriquement par des profils méridiens initiaux. Selon l'invention, le profil méridien initial de l'armature de sommet est localement concave sur une partie médiane de largeur axiale au moins égale à 0,25 fois la largeur axiale de l'armature de sommet.

La solution technique décrit par le document WO 2010000747 permet d'augmenter la durée de vie sur usure d'un pneumatique d'avion, par une limitation de l'usure différentielle de la bande de roulement, entre une partie médiane et les parties latérales axialement extérieures à cette partie médiane.

Si le pneumatique dure plus longtemps en raison d'une usure plus régulière dans la largeur de la bande de roulement, ses performances d'endurance doivent être garanties pendant toute sa durée de vie plus longue grâce à cette meilleure usure. En particulier, l'endurance du sommet du pneumatique, c'est-à-dire sa capacité à résister dans la durée aux fortes sollicitations mécaniques auxquelles est soumis le pneumatique, doit être améliorée. Par fortes sollicitations mécaniques, on entend, par exemple et de façon non limitative, dans le cas d'un pneumatique d'avion de ligne, une pression nominale supérieure à 15 bars, une charge nominale supérieure à 20 tonnes et une vitesse maximale de 360 km/h.

Les inventeurs se sont donnés pour objectif d'améliorer l'endurance du sommet d'un pneumatique pour avion, lorsque sa durée de vie est augmentée en raison d'une amélioration de l'usure de la bande de roulement.

Cet objectif a été atteint, selon l'invention, par un pneumatique pour avion, comprenant :
- une bande de roulement,
- une armature de sommet radialement intérieure à la bande de roulement et comprenant au moins une couche de sommet,
- la couche de sommet radialement intérieure ayant une largeur axiale au moins égale aux deux tiers de la largeur axiale maximale du pneumatique et comprenant une portion concave dont les limites axiales, de part et d'autre du plan équatorial, sont les points radialement extérieurs de ladite couche de sommet,
- une armature de carcasse radialement intérieure à l'armature de sommet et comprenant au moins une couche de carcasse,
- la couche de carcasse radialement extérieure comprenant une portion concave dont les limites axiales, de part et d'autre du plan équatorial, sont les points radialement extérieurs de ladite couche de carcasse,
la distance radiale entre les portions concaves respectives de la couche de sommet radialement intérieure et de la couche de carcasse radialement extérieure étant maximale dans le plan équatorial et décroissant continûment à partir du plan équatorial jusqu'aux limites axiales desdites portions concaves, les plus proches axialement du plan équatorial, où elle atteint une valeur minimale.

L'armature de sommet d'un pneumatique est généralement constituée d'une pluralité de couches de sommet radialement superposées et ayant, dans un plan méridien du pneumatique, des largeurs axiales généralement différentes d'une couche à l'autre, afin d'étager les extrémités axiales desdites couches de sommet. L'armature de sommet comprend généralement au moins une couche de sommet dite large, c'est-à-dire que sa largeur axiale est au moins égale aux deux tiers de la largeur axiale maximale du pneumatique. La largeur axiale maximale du pneumatique est mesurée au niveau des flancs, le pneumatique étant monté sur sa jante et faiblement gonflé, c'est-à-dire gonflé à une pression égale à 10% de la pression nominale recommandée.

La largeur axiale d'une couche de sommet est la distance axiale entre les points d'extrémités de la couche de sommet. Elle est usuellement mesurée sur une coupe méridienne de pneumatique, obtenue par découpage du pneumatique selon deux plans méridiens. A titre d'exemple, une coupe méridienne de pneumatique a une épaisseur selon la direction circonférentielle d'environ 60 mm au niveau de la bande de roulement.

Dans le pneumatique selon l'invention, la couche de sommet radialement intérieure, c'est-à-dire la couche de sommet la plus radialement intérieure parmi les couches de sommet, a une largeur axiale au moins égale aux deux tiers de la largeur axiale maximale du pneumatique : c'est donc une couche de sommet large.

En outre, la couche de sommet radialement intérieure comprend une portion concave dont les limites axiales, de part et d'autre du plan équatorial, sont les points radialement extérieurs de ladite couche de sommet. Ces limites axiales sont généralement sensiblement équidistantes du plan équatorial, c'est-à-dire sensiblement symétriques par rapport au plan équatorial, aux tolérances de fabrication près, mais des distances différentes de part et d'autre du plan équatorial ne sont pas exclues. Une couche de sommet large est nécessaire pour avoir une portion concave de largeur axiale significative.

Une portion concave, dans le plan méridien, comprend un point radialement intérieur dans le plan équatorial et deux points radialement extérieurs, de part et d'autre du plan équatorial, qui sont les limites axiales de la portion concave. Tous les points de la portion concave sont donc radialement extérieurs au point positionné dans le plan équatorial et radialement intérieurs aux points, limites axiales de la portion concave.

Une portion concave au sens de l'invention n'est pas une portion concave au sens mathématique du terme. En effet elle comprend une partie centrale concave au sens mathématique, avec, en tout point de ladite partie centrale concave, un centre de courbure radialement extérieur à ladite portion centrale concave, et, de part et d'autre de la partie centrale concave, une partie latérale convexe au sens mathématique, avec, en tout point de ladite partie latérale convexe, un centre de courbure radialement intérieur à ladite portion latérale convexe. La partie centrale concave est axialement délimitée par deux points d'inflexion, de part et d'autre du plan équatorial. Chaque partie latérale convexe est délimitée axialement à l'intérieur, par un point d'inflexion, et axialement à l'extérieur par une limite axiale de la portion concave.

La présence d'une portion concave implique la présence de deux portions convexes axialement extérieures à ladite portion concave. Ces portions convexes sont limitées axialement à l'extérieur par les extrémités de la couche de travail.

Les autres couches de sommet, radialement extérieures à la couche de sommet intérieure, comprennent souvent une portion concave de largeur axiale sensiblement égale à celle de la portion concave de la couche de sommet radialement intérieure. Ceci se produit en particulier lorsque les couches de sommet sont deux à deux adjacentes et non séparées par des éléments intercalaires, par exemple, en matériau élastomérique. Les profils méridiens respectifs desdites couches de sommet sont alors deux à deux parallèles, c'est-à-dire équidistants sur toutes leurs largeurs axiales respectives.

Egalement selon l'invention, la couche de carcasse radialement extérieure comprend une portion concave dont les limites axiales, de part et d'autre du plan équatorial, sont les points radialement extérieurs de ladite couche de carcasse.

L'armature de carcasse est généralement constituée d'une superposition de couches de carcasse, chacune d'entre elles étant ancrée dans chaque bourrelet du pneumatique par un enroulement autour d'un élément de renforcement circonférentiel généralement métallique, appelé tringle. Dans la zone de sommet, radialement à l'intérieur de l'armature de sommet, la couche de carcasse radialement extérieure, c'est-à-dire la plus radialement extérieure parmi les couches de carcasse, comprend ainsi une portion concave, dont les limites axiales, de part et d'autre du plan équatorial, sont les points radialement extérieurs de ladite couche de carcasse. Ces limites axiales sont généralement sensiblement équidistantes du plan équatorial, c'est-à-dire sensiblement symétriques par rapport au plan équatorial, aux tolérances de fabrication près, mais des distances différentes de part et d'autre du plan équatorial ne sont pas exclues.

Par ailleurs, les limites axiales de la portion concave de la couche de carcasse radialement extérieure ne sont pas nécessairement aux mêmes distances axiales, par rapport au plan équatorial, que les limites axiales de la portion concave de la couche de sommet radialement intérieure. En d'autres termes, les portions concaves respectives de la couche de carcasse radialement extérieure et de la couche de sommet radialement intérieure n'ont pas nécessairement la même largeur axiale.

De façon analogue à la couche de sommet radialement intérieure, la portion concave de la couche de carcasse radialement extérieure n'est pas une portion concave au sens mathématique du terme et comprend une partie centrale concave axialement positionnée entre deux parties latérales convexes.

Par conséquent, les couches de carcasse radialement intérieures à la couche de carcasse extérieure, du fait qu'elles sont adjacentes deux à deux, vont également présenter une portion concave de largeur axiale sensiblement égale à celle de la portion concave de la couche de carcasse radialement extérieure.

La caractéristique essentielle de l'invention est que la distance radiale entre les portions concaves respectives de la couche de sommet radialement intérieure et de la couche de carcasse radialement extérieure est maximale dans le plan équatorial et décroît continûment à partir du plan équatorial jusqu'aux limites axiales desdites portions concaves, les plus proches axialement du plan équatorial, où elle atteint une valeur minimale.

En d'autres termes, les portions concaves respectives de la couche de sommet radialement intérieure et de la couche de carcasse radialement extérieure ne sont pas parallèles, c'est-à-dire que la distance radiale entre lesdites portions concaves n'est pas constante.

Cette distance radiale est maximale dans le plan équatorial, ce qui permet de garantir un espace, au niveau du plan équatorial, pour la mise en place éventuelle d'une armature de frettage, constituée d'au moins une couche de frettage. Une telle armature de frettage, positionnée dans cette zone centrale, a pour fonction de limiter les déplacements radiaux de l'armature de carcasse au centre, lors du gonflage du pneumatique, et d'obtenir ainsi des déplacements radiaux de la surface de roulement d'amplitude sensiblement constante sur toute la largeur axiale de la surface de roulement, ce qui est favorable à une usure plus régulière sur toute la largeur axiale de la surface de roulement.

Cette distance décroît continûment à partir du plan équatorial jusqu'aux limites axiales desdites portions concaves, les plus proches axialement du plan équatorial, où elle atteint une valeur minimale. Par limites axiales desdites portions concaves les plus proches axialement du plan équatorial, on entend les limites axiales de la portion concave la moins large. En effet, les largeurs axiales des portions concaves respectives de la couche de carcasse radialement extérieure et de la couche de sommet radialement intérieure n'étant pas nécessairement égales, la distance entre les portions concaves est prise en considération jusqu'aux limites axiales de la portion concave la moins large.

La distance minimale, atteinte au niveau des limites axiales de la portion concave la moins large, permet de rapprocher au maximum l'armature de carcasse et l'armature de sommet dans la zone d'épaule du sommet. Un premier effet technique de cette distance minimale est de minimiser l'épaisseur radiale totale du sommet dans cette zone d'épaule, qui est la plus sollicitée sur le plan thermique. Une réduction de l'épaisseur radiale de la zone d'épaule permet de diminuer la température dans cette zone, et, par conséquent, d'améliorer l'endurance du sommet du pneumatique. Un second effet technique de cette distance minimale est de recoupler mécaniquement l'armature de carcasse et l'armature de sommet dans la zone d'épaule. Par recouplage mécanique, on entend une répartition plus équilibrée des tensions reprises par les éléments de renforcement respectifs de la couche de sommet radialement intérieure et de la couche de carcasse radialement extérieure. Ceci permet d'optimiser l'utilisation du potentiel de résistance mécanique des éléments de renforcement respectifs desdites couches. De plus, concernant la couche de sommet radialement intérieure, la reprise mécanique des tensions par les éléments de renforcement de ladite couche est rééquilibrée entre la portion centrale et les portions latérales. Un autre avantage est le gain en masse par rapport à un pneumatique de référence, grâce à la réduction de l'épaisseur du sommet aux épaules : un tel gain en masse est un enjeu important dans le domaine aéronautique.

La distance radiale maximale entre les portions concaves est avantageusement au moins égale à 1.75 fois, et de préférence au moins égale à 2.5 fois, la distance radiale minimale entre les portions concaves. Un rapport minimal égal à 1.75 permet la mise en place éventuelle d'une armature de frettage constituée d'une seule couche de frettage. Un rapport minimal égal à 2.5 permet la mise en place éventuelle d'une armature de frettage constituée de deux couches de frettage.

Il est en particulier avantageux que la distance radiale maximale entre les portions concaves soit au moins égale à 2.3 mm, de préférence au moins égale à 3.3 mm.

Une distance radiale entre deux couches est mesurée entre les fibres neutres desdites couches. Par couche, on entend couche unitaire, c'est-à-dire une couche comprenant un seul élément de renforcement dans son épaisseur. La fibre neutre d'une couche unitaire passe par les centres des éléments de renforcement de section droite supposée circulaire. Dans une architecture de pneumatique classique, les couches de sommet, de frettage ou de carcasse ont une épaisseur minimale égale à 1 mm. Dans l'hypothèse usuelle où, au niveau du plan équatorial, la couche de sommet radialement intérieure et la couche de carcasse radialement extérieure, d'épaisseurs respectives égales à 1 mm, sont séparées par une armature de frettage constituée d'une seule couche de frettage, d'épaisseur égale à 1 mm, et par une couche de matériau polymérique, d'épaisseur minimale égale à 0.3 mm, la distance radiale mesurée entre les fibres neutres respectives de la couche de sommet radialement intérieure et la couche de carcasse radialement extérieure est alors au moins égale à 2.3 mm. Dans l'hypothèse où l'armature de frettage est constituée d'au moins deux couches de frettage, ladite distance radiale doit être au moins égale à 3.3 mm. Les valeurs de 2.3 mm et 3.3 mm correspondent donc à des minima technologiques dans les hypothèses respectives d'une armature de frettage à une couche de frettage ou à deux couches de frettage.

Il est également particulièrement avantageux que la distance radiale minimale entre les portions concaves soit au moins égale à 1.3 mm et au plus égale à 2.5 mm.

Au niveau des limites axiales des portions concaves, la couche de sommet radialement intérieure et la couche de carcasse radialement extérieure, d'épaisseurs respectives égales à 1 mm, sont généralement séparées par une couche de matériau polymérique, d'épaisseur minimale égale à 0.3 mm. Dans cette hypothèse, la distance radiale minimale mesurée entre les fibres neutres respectives de la couche de sommet radialement intérieure et la couche de carcasse radialement extérieure est au moins égale à 1.3 mm. Comme les inventeurs visent un recouplage efficace entre la couche de sommet radialement intérieure et la couche de carcasse radialement extérieure, cette distance radiale minimale ne doit pas dépasser 2.5 mm.

Selon un mode de réalisation avantageux de l'invention, l'amplitude de concavité de la couche de sommet radialement intérieure, définie comme la distance radiale entre le point positionné dans le plan équatorial et une des limites axiales de la portion concave, est au moins égale à 1 mm.

Selon un autre mode de réalisation avantageux de l'invention, l'amplitude de concavité de la couche de carcasse radialement extérieure, définie comme la distance radiale entre le point positionné dans le plan équatorial et une des limites axiales de la portion concave, est au moins égale à 1 mm.

L'amplitude de concavité d'une couche donnée est déterminée de manière à ce que le profil méridien gonflé de la couche, c'est-à-dire obtenu après gonflage du pneumatique à sa pression nominale recommandée, soit sensiblement plat.

L'amplitude de concavité définie dépend ainsi de la nature du matériau constitutif des éléments de renforcement de la couche concernée, et en particulier du module d'élasticité dudit matériau. L'amplitude de concavité est d'autant plus faible que le module d'élasticité est élevé, car, lors du gonflage, les déplacements radiaux de la portion concave vont être relativement faibles. Dans le cas d'un polymère aromatique, tel que l'aramide, avec un module d'élasticité élevé de l'ordre de 70 GPa, une amplitude de concavité d'environ 2 mm est suffisante pour limiter le déplacement radial de la partie centrale du profil méridien lors du gonflage.

Selon un mode de réalisation préféré de l'invention, le pneumatique d'avion comprend une armature de frettage comprenant au moins une couche de frettage, la couche de frettage ayant une largeur axiale au plus égale à la moitié de la largeur axiale maximale du pneumatique et comprenant des éléments de renforcement parallèles entre eux et inclinés, par rapport à la direction circonférentielle, d'un angle compris entre +10° et -10°, telle que l'armature de frettage est radialement intérieure à la portion concave de la couche de sommet radialement intérieure et radialement extérieure à la portion concave de la couche de carcasse radialement extérieure.

Comme décrit précédemment, l'armature de frettage au centre améliore encore la régularité de l'usure entre le centre et le bord de la surface de roulement, par rapport à une architecture avec des portions concaves d'armature de sommet et de carcasse sans armature de frettage, en limitant encore davantage le différentiel entre les déplacements radiaux de la surface de roulement, lors du gonflage du pneumatique.

Selon une variante préférée de ce mode de réalisation préférée, l'armature de frettage comprend deux couches de frettage.

Avantageusement, les éléments de renforcement d'une couche de frettage sont constitués de polyamides aliphatiques, de polyamides aromatiques ou d'une combinaison de polyamides aliphatiques et de polyamides aromatiques. En d'autres termes, le matériau constitutif des éléments de renforcement d'une couche de frettage sont généralement le nylon ou l'aramide. Les éléments de renforcement peuvent être constitués d'un seul matériau ou combiner des matériaux différents. Par exemple, ils peuvent combiner des filés de filaments en nylon et en aramide, pour constituer des renforts dits hybrides. Ces renforts hybrides combinent avantageusement les propriétés d'extension du nylon et de l'aramide. Ce type de matériau est utilisé avantageusement dans le domaine des pneumatiques d'avion en raison de leur faible densité, ce qui permet des gains en masse cruciaux dans le domaine aéronautique.

Il est également avantageux que les éléments de renforcement d'une couche de sommet soient constitués de polyamides aliphatiques, de polyamides aromatiques ou d'une combinaison de polyamides aliphatiques et de polyamides aromatiques, une couche de sommet comprenant des éléments de renforcement parallèles entre eux et inclinés, par rapport à la direction circonférentielle, d'un angle compris entre +20° et -20°.

Il est enfin avantageux que les éléments de renforcement d'une couche de carcasse soient constitués de polyamides aliphatiques, de polyamides aromatiques ou d'une combinaison de polyamides aliphatiques et de polyamides aromatiques, une couche de carcasse comprenant des éléments de renforcement parallèles entre eux et perpendiculaires à la direction circonférentielle.

Là encore, le matériau constitutif des éléments de renforcement d'une couche de sommet ou de carcasse, en nylon ou en aramide, est un matériau usuel dans le domaine du pneumatique d'avion et présente l'avantage de la légèreté.

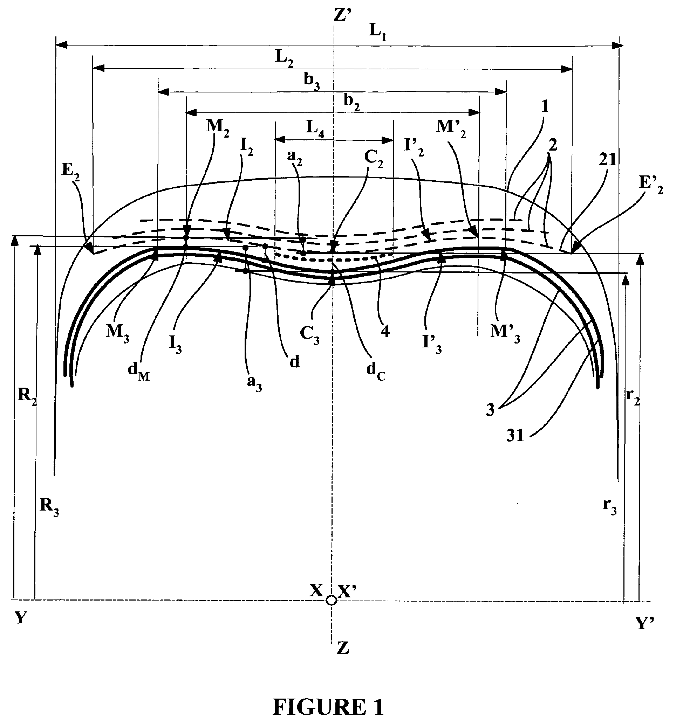

Les caractéristiques et autres avantages de l'invention seront mieux compris à l'aide de la figure 1 qui présente une coupe méridienne d'un sommet de pneumatique selon le mode de réalisation préférée de l'invention, avec une armature de frettage intercalée entre les portions concaves respectives de de la couche de sommet radialement intérieure et de la couche de carcasse radialement extérieure.

La figure 1 n'est pas représentée à l'échelle et de façon simplifiée, afin de faciliter la compréhension de l'invention.

La figure 1 présente une coupe méridienne, c'est-à-dire dans un plan méridien, du sommet d'un pneumatique selon l'invention comprenant une bande de roulement 1, une armature de sommet 2 radialement intérieure à la bande de roulement 1, une armature de carcasse radiale 3 radialement intérieure à l'armature de sommet 2 et une armature de frettage radialement positionnée entre l'armature de sommet 2 et l'armature de carcasse radiale 3.

Les directions respectivement radiale, axiale et circonférentielle sont les directions ZZ', YY' et XX'. Le plan équatorial XZ est défini par les directions radiale et circonférentielle.

L'armature de sommet 2 est constituée de plusieurs couches de sommet dont la plus radialement intérieure est la couche de sommet radialement intérieure 21. La largeur axiale L₂ de la couche de sommet radialement intérieure 21, distance axiale entre ses extrémités axiales E₂ et E'₂, est au moins égale aux deux tiers de la largeur axiale maximale L₁ du pneumatique. La largeur axiale maximale L₁ du pneumatique est mesurée au niveau des flancs, le pneumatique étant monté sur sa jante et faiblement gonflé, c'est-à-dire gonflé à une pression égale à 10% de la pression nominale recommandée.

La couche de sommet radialement intérieure 21 comprend une portion concave dont les limites axiales M₂ et M'₂, de part et d'autre du plan équatorial XZ, sont les points radialement extérieurs de ladite couche de sommet, positionnés à la distance radiale R₂. La couche de sommet radialement intérieure 21 comprend en outre deux portions convexes axialement extérieures à ladite portion concave. Ces portions convexes sont respectivement limitées axialement à l'intérieur par les limites axiales M₂ et M'₂ de la portion concave et axialement à l'extérieur par les extrémités E₂ et E'₂ de la couche de sommet.

La portion concave de la couche de sommet radialement intérieure 21 comprend une partie concave au sens mathématique, axialement délimitée par les points d'inflexion I₂ et I'₂, et, de part et d'autre de ladite partie concave, une partie convexe au sens mathématique, axialement limitée à l'extérieur par une limite axiale M₂ ou M'₂ de ladite portion concave. La largeur axiale b₂ de la portion concave est la distance axiale entre les limites axiales M₂ et M'₂ de la portion concave. L'amplitude de concavité a₂ est la différence entre la distance radiale R₂ des limites axiales M₂ et M'₂ et la distance radiale r₂ du point C₂ situé dans le plan équatorial XZ.

L'armature de carcasse 3 est constituée de plusieurs couches de carcasse dont la plus radialement extérieure est la couche de carcasse radialement extérieure 31. Dans la zone de sommet, radialement à l'intérieur de l'armature de sommet 2, la couche de carcasse radialement extérieure 31 comprend une portion concave dont les limites axiales M₃ et M'₃, de part et d'autre du plan équatorial XZ, sont les points radialement extérieurs de ladite couche de carcasse, positionnés à la distance radiale R₃.

La portion concave de la couche de carcasse radialement extérieure 31 comprend une partie concave au sens mathématique, axialement délimitée par les points d'inflexion I₃ et I'₃, et, de part et d'autre de ladite partie concave, une partie convexe au sens mathématique, axialement limitée à l'extérieur par une limite axiale M₃ ou M'₃ de ladite portion concave. La largeur axiale b₃ de la portion concave est la distance axiale entre les limites axiales M₃ et M'₃ de la portion concave, qui est dans le cas présenté sur la figure 1 supérieure à la largeur axiale b₂ de la portion concave de la couche de sommet radialement intérieure 21. L'amplitude de concavité a₃ est la différence entre la distance radiale R₃ des limites axiales M₃ et M'₃ et la distance radiale r₃ du point C₃ situé dans le plan équatorial XZ.

La distance radiale d_{C}, entre les points radialement intérieurs (C₂, C₃) des portions concaves respectives des couches de sommet radialement intérieure 21 et radialement extérieure 31, est la différence entre les distances radiales (R₂, R₃) respectives de C₂ et C₃.

En outre, la figure 1 représente un mode de réalisation préféré de l'invention dans lequel une armature de frettage 4 est radialement positionnée entre la couche de sommet radialement intérieure 21 et la couche de carcasse radialement extérieure 31. Cette armature de frettage se caractérise par une largeur axiale L₄ étroite, c'est-à-dire au plus égale à la moitié de la largeur axiale maximale L₁ du pneumatique.

Les inventeurs ont réalisé l'invention selon le mode de réalisation préféré, avec une armature de frettage, pour un pneumatique d'avion de dimension 46x17R20, dont l'usage est caractérisé par une pression nominale égale à 15.9 bars, une charge statique nominale égale à 20473 daN et une vitesse de référence maximale de 225 km/h.

Dans le pneumatique étudié, l'armature de sommet est constituée de 7 couches de sommet, dont les éléments de renforcement sont de type hybride. La couche de sommet radialement intérieure a une largeur axiale de 300 mm, soit 0.83 fois la largeur axiale maximale du pneumatique. La largeur de concavité de ladite couche de sommet radialement intérieure est égale à 160 mm, et l'amplitude de concavité est égale à 7.3 mm.

L'armature de carcasse est constituée de 5 couches de carcasse, dont les éléments de renforcement sont en nylon. La couche de carcasse radialement extérieure a une largeur de concavité égale à 160 mm, et une amplitude de concavité égale à 10 mm.

L'armature de frettage est constituée de 2 couches de frettage, dont les éléments de renforcement sont de type hybride. La largeur axiale de l'armature de frettage est égale à 56 mm, soit 0.15 fois la largeur axiale maximale du pneumatique.

Les inventeurs ont montré par simulation numérique par éléments finis sur un pneumatique en roulage stationnaire à une vitesse de 10 km/h, sous une charge statique nominale de 20.5 tonnes et une pression nominale de 15.9 bars, que la température la plus élevée, mesurée au niveau de l'épaule en extrémité d'armature de sommet, diminue d'au moins 2° lorsque l'épaisseur du sommet dans cette zone d'épaule diminue de 2 mm. En d'autres termes, le gain thermique dans cette zone d'épaule est d'au moins 2°C quand l'épaisseur de cette zone d'épaule diminue de 2 mm. Corrélativement, la masse du pneumatique est réduite d'environ 1.7 kg, soit 2.25% de la masse du pneumatique.

## Revendications

1. Pneumatique d'avion comprenant :
- une bande de roulement (1),
- une armature de sommet (2) radialement intérieure à la bande de roulement (1) et comprenant au moins une couche de sommet,
- la couche de sommet radialement intérieure (21) ayant une largeur axiale (L₂) au moins égale aux deux tiers de la largeur axiale maximale (L₁) du pneumatique et comprenant une portion concave dont les limites axiales (M₂, M'₂), de part et d'autre du plan équatorial (XZ), sont les points radialement extérieurs de ladite couche de sommet (21),
- une armature de carcasse (3) radialement intérieure à l'armature de sommet (2) et comprenant au moins une couche de carcasse,
- la couche de carcasse radialement extérieure (31) comprenant une portion concave dont les limites axiales (M₃, M'₃), de part et d'autre du plan équatorial (XZ), sont les points radialement extérieurs de ladite couche de carcasse (31),
**caractérisé en ce que** la distance radiale (d) entre les portions concaves respectives de la couche de sommet radialement intérieure (21) et de la couche de carcasse radialement extérieure (31) est maximale dans le plan équatorial (XZ) et décroît continûment à partir du plan équatorial (XZ) jusqu'aux limites axiales (M₂, M'₂) desdites portions concaves, les plus proches axialement du plan équatorial (XZ), où elle atteint une valeur minimale (d_{M}).

2. Pneumatique d'avion selon la revendication 1, **caractérisé en ce que** la distance radiale maximale (d_{C}) entre les portions concaves est au moins égale à 1.75 fois, et de préférence au moins égale à 2.5 fois, la distance radiale minimale (d_{M}) entre les portions concaves.

3. Pneumatique d'avion selon l'une des revendications 1 ou 2, **caractérisé en ce que** la distance radiale maximale (d_{C}) entre les portions concaves est au moins égale à 2.3 mm, de préférence au moins égale à 3.3 mm.

4. Pneumatique d'avion selon l'une quelconque des revendications 1 à 3, **caractérisé en ce que** la distance radiale minimale (d_{M}) entre les portions concaves est au moins égale à 1.3 mm et au plus égale à 2.5 mm.

5. Pneumatique d'avion selon l'une quelconque des revendications 1 à 4, **caractérisé en ce que** l'amplitude de concavité (a₂) de la couche de sommet radialement intérieure (21), définie comme la distance radiale entre le point (C₂) positionné dans le plan équatorial (XZ) et une des limites axiales (M₂, M'₂) de la portion concave, est au moins égale à 1 mm.

6. Pneumatique d'avion selon l'une quelconque des revendications 1 à 5, **caractérisé en ce que** l'amplitude de concavité (a₃) de la couche de carcasse radialement extérieure (31), définie comme la distance radiale entre le point (C₃) positionné dans le plan équatorial (XZ) et une des limites axiales (M₃, M'₃) de la portion concave, est au moins égale à 1 mm.

7. Pneumatique d'avion selon l'une quelconque des revendications 1 à 6, comprenant une armature de frettage (4) comprenant au moins une couche de frettage, la couche de frettage ayant une largeur axiale (L₄) au plus égale à la moitié de la largeur axiale maximale (L₁) du pneumatique et comprenant des éléments de renforcement parallèles entre eux et inclinés, par rapport à la direction circonférentielle (XX'), d'un angle compris entre +10° et -10°, **caractérisé en ce que** l'armature de frettage (4) est radialement intérieure à la portion concave de la couche de sommet radialement intérieure (21) et radialement extérieure à la portion concave de la couche de carcasse radialement extérieure (31).

8. Pneumatique selon la revendication 7, **caractérisé en ce que** l'armature de frettage (4) comprend deux couches de frettage.

9. Pneumatique selon l'une quelconque des revendications 7 ou 8, **caractérisé en ce que** les éléments de renforcement d'une couche de frettage sont constitués de polyamides aliphatiques, de polyamides aromatiques ou d'une combinaison de polyamides aliphatiques et de polyamides aromatiques.

10. Pneumatique selon l'une quelconque des revendications 1 à 9, une couche de sommet comprenant des éléments de renforcement parallèles entre eux et inclinés, par rapport à la direction circonférentielle (XX'), d'un angle compris entre +20° et -20°, **caractérisé en ce que** les éléments de renforcement d'une couche de sommet sont constitués de polyamides aliphatiques, de polyamides aromatiques ou d'une combinaison de polyamides aliphatiques et de polyamides aromatiques.

11. Pneumatique selon l'une quelconque des revendications 1 à 10, une couche de carcasse comprenant des éléments de renforcement parallèles entre eux et perpendiculaires à la direction circonférentielle (XX'), **caractérisé en ce que** les éléments de renforcement d'une couche de carcasse sont constitués de polyamides aliphatiques, de polyamides aromatiques ou d'une combinaison de polyamides aliphatiques et de polyamides aromatiques.

## Patentansprüche

1. Flugzeugluftreifen, der Folgendes umfasst:
- ein Laufband (1),
- eine Oberseitenbewehrung (2) radial innerhalb des Laufbandes (1), die wenigstens eine Oberseitenschicht enthält,
- wobei die radial innere Oberseitenschicht (21) eine axiale Breite (L₂) hat, die wenigstens gleich zwei Drittel der maximalen axialen Breite (L₁) des Luftreifens beträgt, und einen konkaven Abschnitt aufweist, dessen axiale Grenzen (M₂, M'₂) beiderseits der Äquatorialebene (XZ) die radial äußeren Punkte der Oberseitenschicht (21) sind,
- eine Karkassenbewehrung (3) radial innerhalb der Oberseitenbewehrung (2), die wenigstens eine Karkassenschicht enthält,
- wobei die radial äußere Karkassenschicht (31) einen konkaven Abschnitt aufweist, dessen axiale Grenzen (M₃, M'₃) beiderseits der Äquatorialebene (XZ) die radial äußeren Punkte der Karkassenschicht (31) sind,
**dadurch gekennzeichnet, dass** der radiale Abstand (d) zwischen den konkaven Abschnitten der radial inneren Oberseitenschicht (21) bzw. der radial äußeren Karkassenschicht (31) in der Äquatorialebene (XZ) maximal ist und ausgehend von der Äquatorialebene (XZ) bis zu den axialen Grenzen (M₂, M'₂) der konkaven Abschnitte, die sich axial am nächsten bei der Äquatorialebene (XZ) befinden, kontinuierlich abnimmt und dort einen Minimalwert (d_{M}) erreicht.

2. Flugzeugluftreifen nach Anspruch 1, **dadurch gekennzeichnet, dass** der maximale radiale Abstand (d_{C}) zwischen den konkaven Abschnitten wenigstens gleich dem 1,75-fachen und vorzugsweise wenigstens gleich dem 2,5-fachen minimalen radialen Abstand (d_{M}) zwischen den konkaven Abschnitten ist.

3. Flugzeugluftreifen nach einem der Ansprüche 1 oder 2, **dadurch gekennzeichnet, dass** der maximale radiale Abstand (d_{C}) zwischen den konkaven Abschnitten wenigstens gleich 2,3 mm und vorzugsweise wenigstens gleich 3,3 mm beträgt.

4. Flugzeugluftreifen nach einem der Ansprüche 1 bis 3, **dadurch gekennzeichnet, dass** der minimale radiale Abstand (d_{M}) zwischen den konkaven Abschnitten wenigstens gleich 1,3 mm und höchstens gleich 2,5 mm ist.

5. Flugzeugluftreifen nach einem der Ansprüche 1 bis 4, **dadurch gekennzeichnet, dass** die Konkavitätsamplitude (a₂) der radial inneren Oberseitenschicht (21), die als der radiale Abstand zwischen dem in der Äquatorialebene (XZ) positionierten Punkt (C₂) und einer der axialen Grenzen (M₂, M'₂) des konkaven Abschnitts definiert ist, wenigstens gleich 1 mm ist.

6. Flugzeugluftreifen nach einem der Ansprüche 1 bis 5, **dadurch gekennzeichnet, dass** die Konkavitätsamplitude (a₃) der radial äußeren Karkassenschicht (31), die als der radiale Abstand zwischen dem in der Äquatorialebene (XZ) positionierten Punkt (C₃) und einer der axialen Grenzen (M₃, M'₃) des konkaven Abschnitts definiert ist, wenigstens gleich 1 mm ist.

7. Flugzeugluftreifen nach einem der Ansprüche 1 bis 6, der eine Versteifungsbewehrung (4) umfasst, die wenigstens eine Versteifungsschicht enthält, wobei die Versteifungsschicht eine axiale Breite (L₄) hat, die höchstens gleich der Hälfte der maximalen axialen Breite (L₁) des Luftreifens ist, und die zueinander parallele und in Bezug auf die Umfangsrichtung (XX') um einen Winkel im Bereich von +10° bis -10° geneigte Verstärkungselemente enthält, **dadurch gekennzeichnet, dass** sich die Versteifungsbewehrung (4) radial innerhalb des konkaven Abschnitts der radial inneren Oberseitenschicht (21) und radial außerhalb des konkaven Abschnitts der radial äußeren Karkassenschicht (31) befindet.

8. Luftreifen nach Anspruch 7, **dadurch gekennzeichnet, dass** die Versteifungsbewehrung (4) zwei Versteifungsschichten umfasst.

9. Luftreifen nach einem der Ansprüche 7 oder 8, **dadurch gekennzeichnet, dass** die Verstärkungselemente einer Versteifungsschicht aus aliphatischen Polyamiden, aromatischen Polyamiden oder einer Kombination aus aliphatischen Polyamiden und aromatischen Polyamiden gebildet sind.

10. Luftreifen nach einem der Ansprüche 1 bis 9, wobei eine Oberseitenschicht zueinander parallele und in Bezug auf die Umfangsrichtung (XX') um einen Winkel im Bereich von +20° bis -20° geneigte Verstärkungselemente umfasst, **dadurch gekennzeichnet, dass** die Verstärkungselemente einer Oberseitenschicht aus aliphatischen Polyamiden, aromatischen Polyamiden oder einer Kombination aus aliphatischen Polyamiden und aromatischen Polyamiden gebildet sind.

11. Luftreifen nach einem der Ansprüche 1 bis 10, wobei eine Karkassenschicht zueinander parallele und zu der Umfangsrichtung (XX') senkrechte Verstärkungselemente enthält, **dadurch gekennzeichnet, dass** die Verstärkungselemente einer Karkassenschicht aus aliphatischen Polyamiden, aromatischen Polyamiden oder einer Kombination aus aliphatischen Polyamiden und aromatischen Polyamiden gebildet sind.

## Claims

1. Aeroplane tyre comprising:
- a tread (1),
- a crown reinforcement (2) radially on the inside of the tread (1) and comprising at least one crown layer,
- the radially interior crown layer (21) having an axial width (L₂) at least equal to two-thirds of the maximum axial width (L₁) of the tyre and comprising a concave portion of which the axial limits (M₂, M'₂), on either side of the equatorial plane (XZ), are the radially exterior points of the said crown layer (21),
- a carcass reinforcement (3) radially on the inside of the crown reinforcement (2) and comprising at least one carcass layer,
- the radially exterior carcass layer (31) comprising a concave portion of which the axial limits (M₃, M'₃), on either side of the equatorial plane (XZ), are the radially exterior points of the said carcass layer (31),
**characterized in that** the radial distance (d) between the respective concave portions of the radially interior crown layer (21) and of the radially exterior carcass layer (31) is at a maximum in the equatorial plane (XZ) and decreases continuously from the equatorial plane (XZ) as far as the axial limits (M₂, M'₂) of the said concave portions axially closest to the equatorial plane (XZ), where it reaches a minimum value (d_{M}).

2. Aeroplane tyre according to Claim 1, **characterized in that** the maximum radial distance (d_{C}) between the concave portions is at least equal to 1.75 times, and preferably at least equal to 2.5 times, the minimum radial distance (d_{M}) between the concave portions.

3. Aeroplane tyre according to either of Claims 1 and 2, **characterized in that** the maximum radial distance (d_{C}) between the concave portions is at least equal to 2.3 mm, preferably at least equal to 3.3 mm.

4. Aeroplane tyre according to any one of Claims 1 to 3, **characterized in that** the minimum radial distance (d_{M}) between the concave portions is at least equal to 1.3 mm and at most equal to 2.5 mm.

5. Aeroplane tyre according to any one of Claims 1 to 4, **characterized in that** the amplitude of concavity (a₂) of the radially interior crown layer (21), defined as being the radial distance between the point (C₂) positioned in the equatorial plane (XZ) and one of the axial limits (M₂, M'₂) of the concave portion, is at least equal to 1 mm.

6. Aeroplane tyre according to any one of Claims 1 to 5, **characterized in that** the amplitude of concavity (a₃) of the radially exterior carcass layer (31), defined as being the radial distance between the point (C₃) positioned in the equatorial plane (XZ) and one of the axial limits (M₃, M'₃) of the concave portion, is at least equal to 1 mm.

7. Aeroplane tyre according to any one of Claims 1 to 6, comprising a hooping reinforcement (4) comprising at least one hooping layer, the hooping layer having an axial width (L₄) at most equal to half the maximum axial width (L₁) of the tyre and comprising reinforcing elements that are parallel to one another and inclined, with respect to the circumferential direction (XX'), by an angle of between +10° and -10°, **characterized in that** the hooping reinforcement (4) is radially on the inside of the concave portion of the radially interior crown layer (21) and radially on the outside of the concave portion of the radially exterior carcass layer (31).

8. Tyre according to Claim 7, **characterized in that** the hooping reinforcement (4) comprises two hooping layers.

9. Tyre according to either one of Claims 7 and 8, **characterized in that** the reinforcing elements of a hooping layer are made of aliphatic polyamides, aromatic polyamides or a combination of aliphatic polyamides and of aromatic polyamides.

10. Tyre according to any one of Claims 1 to 9, a crown layer comprising reinforcing elements that are parallel to one another and inclined, with respect to the circumferential direction (XX'), by an angle of between +20° and -20°, **characterized in that** the reinforcing elements of a crown layer are made of aliphatic polyamides, aromatic polyamides or a combination of aliphatic polyamides and of aromatic polyamides.

11. Tyre according to any one of Claims 1 to 10, a carcass layer comprising reinforcing elements that are parallel to one another and perpendicular to the circumferential direction (XX'), **characterized in that** the reinforcing elements of a carcass layer are made of aliphatic polyamides, aromatic polyamides or a combination of aliphatic polyamides and of aromatic polyamides.
